# EUROPÄISCHE PATENTANMELDUNG

(11) **EP 4 092 808 A1**
(43) Veröffentlichungstag der Anmeldung: **23.11.2022**
(21) Anmeldenummer: 21174112.9
(22) Anmeldetag: 17.05.2021
(51) Int. Cl.: H01M 10/48, H01M 50/258, H01M 50/284, H01M 50/502, H01M 10/42

(54) **MODULARE AKKUEINHEIT FÜR EINE HANDWERKZEUGMASCHINE, HANDWERKZEUGMASCHINE UND REPARATURVERFAHREN**

(71) Anmelder: Hilti Aktiengesellschaft, 9494 Schaan (LI)
(72) Erfinder: Kuhlmann, Kevin, 86916 Kaufering (DE)
(74) Vertreter: Hilti Aktiengesellschaft Corporate Intellectual Property

(57) **Zusammenfassung**

Modulare Akkueinheit (100) für eine Handwerkzeugmaschine (1), mit einem Elektronikmodul (110) und wenigstens einem Zellenmodul (120), wobei das Elektronikmodul (110) zum Überwachen eines Zustands des wenigstens einen Zellenmoduls (120) in Abhängigkeit wenigstens eines Messwerts (U, I, T) eingerichtet ist, wobei das wenigstens eine Zellenmodul (120) einen Halterahmen (121) und mehrere von dem Halterahmen (121) gehaltene Einzelzellen (122) aufweist, wobei die Einzelzellen (122) in dem Halterahmen (121) zum Bereitstellen einer vorgegebenen Ausgangsspannung elektrisch miteinander verbunden (123) sind, und wobei das Elektronikmodul (110) und das wenigstens eine Zellenmodul (120) ausschließlich über lösbare mechanische (130) und elektrische (132) Verbindungen miteinander verbindbar sind.

## Beschreibung

### GEBIET DER ERFINDUNG

Die vorliegende Erfindung betrifft eine modulare Akkueinheit für eine Handwerkzeugmaschine, eine Handwerkzeugmaschine mit einer entsprechenden Akkueinheit und ein Reparaturverfahren für eine solche Akkueinheit.

Handwerkzeugmaschinen werden häufig mit Akkueinheiten betrieben. Akkueinheiten verlieren im Laufe der Zeit durch Alterung zunehmend an Leistung. Die Alterung betrifft dabei insbesondere die einzelnen galvanischen Zellen. Akkueinheiten weisen neben den einzelnen Zellen häufig weitere Komponenten auf, wie eine Elektronik oder auch ein Gehäuse, die von der Alterung weniger oder kaum betroffen sind. Daher können diese Komponenten noch weiterverwendet werden, wenn die Zellen der Akkueinheit bereits unbrauchbar sind.

Bekannte Akkueinheiten sind allerdings derart integriert, dass sich die Komponenten nicht ohne Beschädigung voneinander trennen lassen, beispielsweise über Schweiß- oder Lötverbindungen.

Vor diesem Hintergrund besteht die Aufgabe der vorliegenden Erfindung, eine verbesserte Akkueinheit für eine Handwerkzeugmaschine zu schaffen.

### OFFENBARUNG DER ERFINDUNG

Gemäß einem ersten Aspekt wird eine modulare Akkueinheit für eine Handwerkzeugmaschine vorgeschlagen. Die modulare Akkueinheit weist ein Elektronikmodul und wenigstens ein Zellenmodul auf. Das Elektronikmodul ist zum Überwachen eines Zustands des wenigstens einen Zellenmoduls in Abhängigkeit wenigstens eines Messwerts eingerichtet. Das wenigstens eine Zellenmodul weist einen Halterahmen und mehrere von dem Halterahmen gehaltene Einzelzellen auf, wobei die Einzelzellen in dem Halterahmen zum Bereitstellen einer vorgegebenen Ausgangsspannung elektrisch miteinander verbunden sind. Das Elektronikmodul und das wenigstens eine Zellenmodul sind ausschließlich über lösbare mechanische und elektrische Verbindungen miteinander verbindbar sind.

Diese modulare Akkueinheit (nachfolgend auch kurz nur "Akkueinheit") weist den Vorteil auf, dass die einzelnen Module unabhängig voneinander austauschbar sind. Im Falle eines Defekts muss daher nicht die ganze Akkueinheit ersetzt werden, sondern nur das defekte Modul. Zudem kann die Akkueinheit repariert werden, indem diese in die einzelnen Module zerlegt wird, wodurch die Defektstelle zugänglich wird.

Die Akkueinheit ist insbesondere zum Betreiben einer Handwerkzeugmaschine, die mit einer Betriebsspannung im Bereich von 9 V - 72 V, bevorzugt zwischen 12 V - 36 V, betrieben wird, eingerichtet.

Die Ausgangspannung wird beispielsweise durch in dem Zellenmodul in Reihe geschaltete Einzelzellen erreicht. Beispielsweise hat eine einzelne Lithium-Ionen-Zelle im voll geladenen Zustand eine Ausgangsspannung (Klemmenspannung) von etwa 3,6 V. Werden zwei dieser Zellen in Reihe geschaltet, verdoppelt sich die Ausgangsspannung auf etwa 7,2 V. Außer Lithium-Ionen-Zellen können auch andere galvanische Zellen verwendet werden, wie Nickel-Cadmium, Nickel-Metallhydrid oder auch Bleizellen, wobei diese dann andere Ausgangsspannungen aufweisen können.

Das Elektronikmodul umfasst beispielsweise einen integrierten Schaltkreis, wie einen ASIC (application specific integrated circuit), einen PLC (programmabe logic controller), oder dergleichen. Dieser wird beispielsweise von einer an dem gekoppelten Zellenmodul abgegriffenen Spannung betrieben. Der integrierte Schaltkreis ist dazu eingerichtet, den Zustand des Zellenmoduls zu überwachen. Der Zustand kann dabei Angaben zu einer aktuellen verbleibenden Kapazität (Ladezustand), einem aktuellen Lade- und/oder Entladestrom, einer aktuellen Klemmenspannung, einer aktuellen Einzelzellspannung jeder einzelnen Zelle des wenigstens einen Zellenmoduls und einer aktuellen Temperatur einer oder mehrere Zellen des wenigstens einen Zellenmoduls umfassen.

Zum Überwachen des Zustands kann das Elektronikmodul eine Anzahl von Sensoren umfassen und/oder mit Sensoren, die Teil des Zellenmoduls sind, elektrisch verbunden werden. Vorzugsweise umfasst das Elektronikmodul einen oder mehrere Spannungsmesser, einen oder mehrere Strommesser und ist mit wenigstens einem Temperatursensor verbunden.

Die Elektronikeinheit kann zum Steuern eines Lade- oder Entladestroms der wenigsten einen Zelleneinheit eingerichtet sein. Hierbei kann die Elektronikeinheit insbesondere mit Elementen der Handwerkzeugmaschine und/oder einer Ladevorrichtung zusammenwirken.

In Ausführungsformen ist das Elektronikmodul zum Bereitstellen von elektrischen Kontakten zum elektrischen Verbinden des wenigstens einen Zellenmoduls mit der Handwerkzeugmaschine eingerichtet.

In dieser Ausführungsform fließt ein Strom von dem Zellenmodul zu der Handwerkzeugmaschine über wenigstens eine in dem Elektronikmodul angeordnete Stromleitung. Man kann auch sagen, dass ein Pol oder beide Pole des wenigstens einen Zellenmoduls durch das Elektronikmodul durchgeschleift sind. In dieser Ausführungsform kann das Elektronikmodul beispielsweise zum Steuern eines Entladestroms der wenigstens einen Zelleneinheit in Abhängigkeit eines entsprechenden Signals von der Handwerkzeugmaschine und/oder des Zustands des Zellenmoduls eingerichtet sein. Das Elektronikmodul kann ferner dazu eingerichtet sein, einen Stromfluss von dem Zellenmodul zu der Handwerkzeugmaschine zu unterbrechen. Das Elektronikmodul weist beispielsweise zwei zellenmodulseitige Kontakte zum Kontaktieren von zwei korrespondierenden, auf dem Zellenmodul angeordneten Kontakten, an denen die Ausgangsspannung des Zellenmoduls anliegt, auf. Weiterhin weist das Elektronikmodul zwei handwerkzeugmaschinenseitige Kontakte zum Kontaktieren von zwei korrespondierenden, auf der Handwerkzeugmaschine angeordneten Kontakten auf, an denen die Ausgangsspannung bereitgestellt wird, auf.

Das Zellenmodul umfasst eine Anordnung mehrerer Einzelzellen, die in dem Zellenmodul fest miteinander verdrahtet sind, um die Ausgangsspannung bereitzustellen. Die Einzelzellen können in dem Zellenmodul sowohl teilweise in einer elektrischen Parallelschaltung als auch in einer elektrischen Reihenschaltung verbunden sein. Eine elektrische Parallelschaltung eignet sich, um die Kapazität des Zellenmoduls zu erhöhen, ohne dabei die Ausgangsspannung zu erhöhen. Der Halterahmen des Zellenmoduls gibt der Anordnung der Einzelzellen eine mechanische Stabilität. Die Einzelzellen sind in dem Zellenmodul vorzugsweise mit einer nicht lösbaren Verbindung befestigt. In Ausführungsformen kann vorgesehen sein, dass die Einzelzellen lösbar von dem Zellenmodul gehalten werden. Der Halterahmen des Zellenmoduls ist beispielsweise aus Kunststoff, aus einem Verbundwerkstoff, insbesondere umfassend Kohlefaser, Glasfaser und/oder Aramidfaser, aus Metall und/oder aus einer Kombination der vorgenannten Materialien gefertigt.

Unter einer Einzelzelle wird insbesondere eine galvanische Zelle verstanden, die genau zwei elektrische Pole bereitstellt. Das heißt, dass eine Einzelzelle insbesondere nicht aus zwei oder mehr Einheiten besteht, die jeweils für sich genommen eine galvanische Zelle bilden.

Das Elektronikmodul und das wenigstens eine Zellenmodul sind bevorzugt mittels Rast-, Schnapp-, Steck- und/oder Schraubverbindungen kraftschlüssig, vorzugsweise formschlüssig, miteinander verbindbar sind. Diese Verbindungen lassen sich lösen, so dass das Elektronikmodul und das wenigstens eine Zellenmodul von einem gekoppelten Zustand in einen zerlegten Zustand überführbar sind, ohne dass dabei ein Schaden an dem Elektronikmodul oder dem Zellenmodul entsteht.

Elektrische Verbindungen zwischen dem Elektronikmodul und dem Zellenmodul werden bevorzugt mittels Steckkontakten hergestellt, es können aber auch Federkontakte verwendet werden, insbesondere bei reinen Signalstrecken, über die nur ein minimaler Strom fließt.

Gemäß einer Ausführungsform der modulare Akkueinheit ist das Elektronikmodul zum Erfassen wenigstens eines Spannungswerts und/oder eines Stromwerts und zum Überwachen des Zustands des wenigstens einen Zellenmoduls in Abhängigkeit des erfassten Spannungswert und/oder Stromwerts eingerichtet.

In dieser Ausführungsform ist das Elektronikmodul vorteilhaft zum Überwachen eines Ladezustands des wenigstens einen Zellenmoduls eingerichtet. Das Elektronikmodul kann damit verhindern, dass das Zellenmodul zu stark entladen wird, was die Einzelzellen in dem Zellenmodul beschädigen oder sogar zerstören könnte.

Gemäß einer weiteren Ausführungsform der modularen Akkueinheit umfasst das Elektronikmodul wenigstens einen Temperatursensor zum Erfassen wenigstens eines Temperaturwerts des wenigstens einen Zellenmoduls und das Elektronikmodul ist zum Überwachen des Zustands des Zellenmoduls in Abhängigkeit des erfassten Temperaturwerts eingerichtet.

Der erfasste Temperaturwert bezieht sich insbesondere auf eine Temperatur an der Oberfläche wenigstens einer Einzelzelle. Der Temperaturwert ist repräsentativ für eine in der Einzelzelle vorliegende Temperatur und für eine mittlere Temperatur in dem Zellenmodul. Man kann beispielsweise annehmen, dass weitere Einzelzellen eine im Wesentlichen gleiche Temperatur aufweisen.

Je nach Anzahl der Einzelzellen in dem Zellenmodul können mehrere Temperatursensoren vorgesehen sein, die zum Erfassen eines jeweiligen Temperaturwerts unterschiedlicher Einzelzellen eingerichtet sind.

Die Temperatur hat auf die Einzelzellen einen erheblichen Einfluss. Einerseits ist eine Mobilität der Ladungsträger in de Einzelzelle bei höherer Temperatur erhöht, wodurch ein Innenwiderstand der Einzelzelle sinkt. Andererseits steigt mit steigender Temperatur auch eine chemische Reaktionsrate von unerwünschten chemischen Reaktionen, wie Korrosion, in der Einzelzelle an, was die Zelle schneller altern lässt. Zudem kann die Einzelzelle bei Überschreiten einer oberen Grenztemperatur dauerhaften Schaden nehmen oder zerstört werden, im schlimmsten Fall kann sich die Einzelzelle sogar entzünden und/oder zersetzen. Daher ist die Überwachung der Temperatur durch das Elektronikmodul vorteilhaft. Wenn die Temperatur zu hoch wird, kann das Elektronikmodul beispielsweise einen Lade- oder Entladestrom für das Zellenmodul reduzieren, um so die Lebensdauer des Zellenmoduls zu erhöhen.

Gemäß einer weiteren Ausführungsform der modularen Akkueinheit wird der Temperatursensor von einem Federelement in einem direkten Kontakt mit einer Einzelzelle des wenigstens einen Zellenmoduls gehalten.

In dieser Ausführungsform ist der Temperatursensor nicht fest mit dem Zellenmodul verbunden, sondern kann mit dem Elektronikmodul von dem Zellenmodul getrennt werden, ohne dass der Temperatursensor dabei Schaden nimmt.

In Ausführungsformen kann vorgesehen sein, dass der Temperatursensor in das Zellenmodul integriert ist und mittels eines Steckverbinders oder dergleichen mit dem Elektronikmodul verbindbar ist.

Gemäß einer weiteren Ausführungsform der modularen Akkueinheit ist das Elektronikmodul zum Erfassen einer Einzelzellspannung jeder Einzelzelle des wenigstens einen Zellenmoduls eingerichtet, wobei für jede Einzelzelle eine zugeordnete elektrische Leitung vorgesehen ist.

Diese Ausführungsform ermöglich es vorteilhaft zu ermitteln, ob einzelne Einzelzellen des Zellenmoduls defekt sind und/oder die Leistung des Zellenmoduls begrenzen. In einer elektrischen Reihenschaltung fließt der Strom durch jede der in Reihe geschalteten Einzelzellen, weshalb es problematisch ist, wenn auch nur eine der Zellen beispielsweise einen erhöhten Innenwiderstand aufweist, da dies den Stromfluss insgesamt begrenzt und zudem die betroffene Einzelzelle besonders stark erwärmt wird.

Die Spannung einer jeweiligen Einzelzelle wird insbesondere über eine zugeordnete Leitung und einem Federkontakt abgegriffen.

Gemäß einer weiteren Ausführungsform der modularen Akkueinheit sind die Einzelzellen in dem wenigstens einen Zellenmodul in einer elektrischen Reihenschaltung und/oder elektrischen Parallelschaltung miteinander verbunden sind, so dass das Zellenmodul die vorgegebene Ausgangsspannung und eine vorgegebene Ladungskapazität aufweist.

Gemäß einer weiteren Ausführungsform der modularen Akkueinheit umfasst diese zwei oder mehr Zellenmodule, die wiederlösbar miteinander koppelbar sind.

Diese Ausführungsform hat den Vorteil, dass, wenn eines der Zellenmodule defekt ist oder eine unzureichende Leistung aufweist, nur dieses ausgetauscht werden muss, während das andere Zellenmodul weiterverwendet werden kann.

In dieser Ausführungsform umfasst die Akkueinheit mindestens das Elektronikmodul und zwei Zellenmodule.

Vorzugsweise werden zunächst die Zellenmodule miteinander gekoppelt und dann werden die gekoppelten Zellenmodule mit dem Elektronikmodul gekoppelt.

In Ausführungsformen kann vorgesehen sein, dass die Zellenmodule einzeln mit dem Elektronikmodul koppelbar sind.

Gemäß einer weiteren Ausführungsform der modularen Akkueinheit sind die zwei oder mehr Zellenmodule in einer elektrischen Reihenschaltung miteinander verbunden, so dass die Ausgangsspannung der Akkueinheit der Summe der von den zwei oder mehr Zellenmodulen bereitgestellten Ausgangsspannung entspricht.

Diese Ausführungsform hat den Vorteil, dass speziell bei Handwerkzeugmaschinen, die für eine hohe Betriebsspannung ausgelegt sind, wie beispielsweise 24 V, 36 V, 48 V oder bis zu 72 V, für welche eine hohe Anzahl von in Reihe geschalteten Einzelzellen notwendig ist, die Zellenmodule dennoch mit einer geringeren Anzahl an Einzelzellen gefertigt werden können.

Gemäß einer weiteren Ausführungsform der modularen Akkueinheit sind die zwei oder mehr Zellenmodule mittels Rast-, Schnapp-, Steck- und/oder Schraubverbindungen miteinander verbindbar, insbesondere formschlüssig und/oder kraftschlüssig miteinander verbindbar.

Gemäß einem zweiten Aspekt wird eine Handwerkzeugmaschine mit einer modularen Akkueinheit gemäß dem ersten Aspekt vorgeschlagen.

Die Handwerkzeugmaschine ist beispielsweise als eine Bohrmaschine, ein Schlagbohrer, ein Bohrhammer, eine Handkreissäge, eine Stichsäge, eine Fuchsschwanzsäge, ein Trennschleifer, ein Rührwerk oder dergleichen ausgebildet.

Gemäß einem dritten Aspekt wird ein Reparaturverfahren für eine modulare Akkueinheit vorgeschlagen. Die modulare Akkueinheit umfasst ein Elektronikmodul und wenigstens ein Zellenmodul, die ausschließlich über lösbare mechanische und elektrische Verbindungen miteinander verbindbar sind. Das Reparaturverfahren umfasst die Schritte:
Ermitteln eines Zustands des wenigstens einen Zellenmoduls, und
Austauschen des wenigstens einen Zellenmoduls in Abhängigkeit des ermittelten Zustands durch ein Ersatz-Zellenmodul, dessen Zustand besser als der ermittelte Zustand ist.

Die Akkueinheit ist insbesondere wie anhand des ersten Aspekts beschrieben ausgebildet.

Vorteilhaft kann die Akkueinheit repariert werden, ohne dass die Elektronikeinheit oder das wenigstens eine Zellenmodul beschädigt werden. In den allermeisten Fällen ist das Elektronikmodul einer Akkueinheit noch funktionsfähig, wenn das Zellenmodul bereits deutliche Alterungserscheinungen aufweist, weshalb zumeist das Zellenmodul auszutauschen ist.

Gemäß einer Ausführungsform des Reparaturverfahrens umfasst das Austauschen ein Zerlegen der modularen Akkueinheit in das Elektronikmodul und das wenigstens eine Zellenmodul durch Lösen der lösbaren mechanischen und elektrischen Verbindungen, und ein Zusammensetzen der modularen Akkueinheit mit dem Elektronikmodul und dem Ersatz-Zellenmodul durch Schließen der lösbaren mechanischen und elektrischen Verbindungen.

Bei dieser Ausführungsform wird insbesondere die Elektronikeinheit weiterverwendet. Dies ist häufig möglich, da die Elektronikeinheit keiner Alterung unterliegt, die mit derjenigen der Zellenmodule vergleichbar ist.

Gemäß einer weiteren Ausführungsform des Reparaturverfahrens ist das Ersatz-Zellenmodul ein fabrikneues Zellenmodul ist.

Gemäß einer weiteren Ausführungsform des Reparaturverfahrens weist die modulare Akkueinheit zwei oder mehr Zellenmodule auf, die wiederlösbar miteinander koppelbar sind, wobei nur genau eines der Zellenmodule ausgetauscht wird und/oder wobei mindestens eines der Zellenmodule nicht ausgetauscht wird.

In dieser Ausführungsform wird mindestens ein Zellenmodul, insbesondere das Zellenmodul mit der besten Leistung, weiterverwendet. Damit kann eine Anzahl von ausgetauschten Zellenmodulen reduziert werden.

Gemäß einer weiteren Ausführungsform des Reparaturverfahrens umfasst das Ermitteln des Zustands eines jeweiligen Zellenmoduls ein Ermitteln einer Ladekapazität, eines Innenwiderstands, einer Anzahl von Ladezyklen und/oder einer Entladekurve des jeweiligen Zellenmoduls.

### KURZE BESCHREIBUNG DER FIGUREN

Die nachfolgende Beschreibung erläutert die Erfindung anhand von exemplarischen Ausführungsformen und Figuren. In den Figuren zeigt:
- Fig. 1: eine schematische Ansicht einer modularen Akkueinheit;
- Fig. 2: eine schematische Ansicht von zwei Zellenmodulen;
- Fig. 3: eine schematische Topologie einer elektrischen Verschaltung einer modularen Akkueinheit für eine Handwerkzeugmaschine;
- Fig. 4: ein schematisches Flussdiagramm eines Reparaturverfahrens für eine modulare Akkueinheit;
- Fig. 5: ein schematisches Flussdiagramm eines weiteren Reparaturverfahrens für modulare Akkueinheiten; und
- Fig. 6: eine schematische Ansicht einer Handwerkzeugmaschine;

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

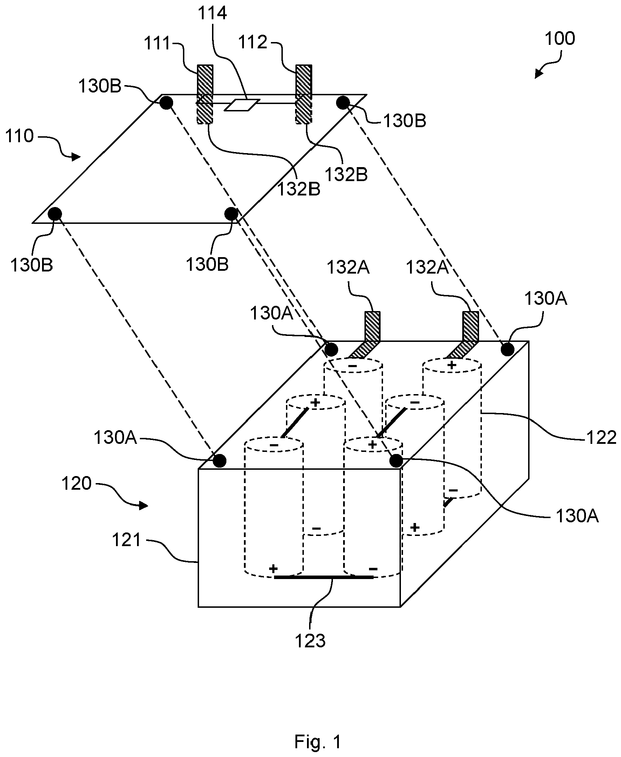

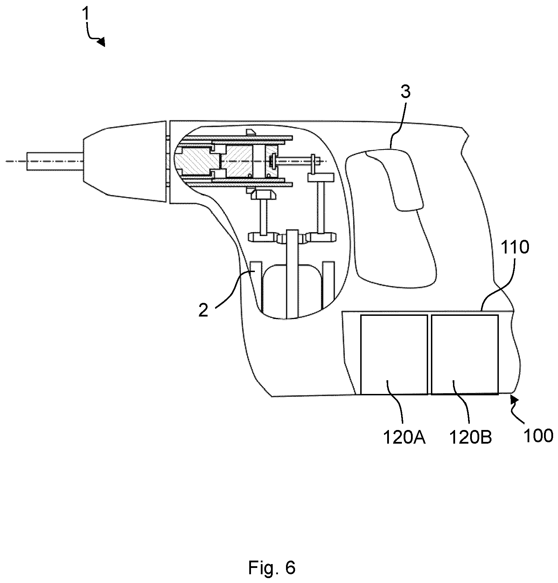

Fig. 1 zeigt eine schematische Ansicht einer modularen Akkueinheit 100 für eine Handwerkzeugmaschine 1 (siehe Fig. 6). Die modulare Akkueinheit 100 umfasst ein Elektronikmodul 110 und ein Zellenmodul 120. Das Zellenmodul 120 umfasst einen Halterahmen 121, welcher zum Halten einer Anzahl von Einzelzellen 122 eingerichtet ist. Die in dem Halterahmen 121 angeordneten Einzelzellen 122 sind über elektrische Verbindungen 123 miteinander fest verdrahtet, so dass das Zellenmodul 120 eine bestimmte Ausgangsspannung und eine bestimmte Gesamtkapazität aufweist. Die Ausgangsspannung und die Gesamtkapazität ergibt sich in Abhängigkeit der Art der Einzelzellen 122, insbesondere deren Einzelzellspannung sowie deren einzelnen Kapazitäten, und der Art der Verdrahtung der Einzelzellen 122 in dem Halterahmen 121. Die elektrischen Verbindungen 123 zwischen den Einzelzellen 122 können in den Halterahmen 121 integriert sein, beispielsweise in Form von Halteblechen, oder aber separat von dem Halterahmen, beispielsweise in Form von einzelnen Drähten oder Kabelstücken, ausgebildet sein. Bei einer elektrischen Reihenschaltung der Einzelzellen 122 entspricht die Ausgangsspannung der Summe der Einzelzellspannungen. Bei einer elektrischen Parallelschaltung entspricht die Gesamtkapazität der Summe der Einzelzellkapazitäten. Die Einzelzellen 122 können in dem Zellenmodul 120 beispielsweise in Gruppen parallelgeschaltet und die Gruppen in Reihe geschaltet vorliegen.

Das Zellenmodul 120 weist lösbare mechanische Verbinder 130A und lösbare elektrische Verbinder 132A auf. Beispielsweise handelt es sich bei den mechanischen Verbindern 130A um Gewinde, die zum Einschrauben einer entsprechenden Schraube geeignet sind, und bei den elektrischen Verbindern 132A um Steckkontakte, die mit korrespondierenden Buchsen verbindbar sind.

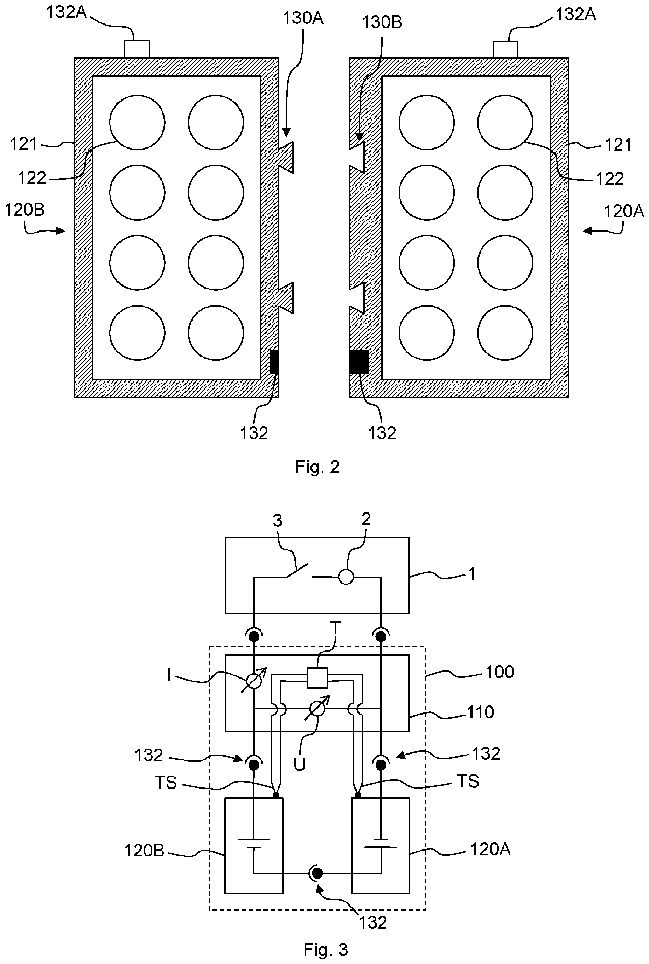

Das Elektronikmodul 110 weist zu den lösbaren mechanischen 130A und elektrischen 132A Verbindern des Zellenmoduls 120 korrespondierende Verbinder 130B, 132B auf. In diesem Beispiel sind dies beispielsweise Schrauben 130B und Buchsen 132B. Das Elektronikmodul 110 ist zum Überwachen eines Zustands Zellenmoduls 120 in Abhängigkeit wenigstens eines Messwerts U, I, T (siehe Fig. 3) eingerichtet. Hierzu umfasst das Elektronikmodul 110 insbesondere eine entsprechende Messeinrichtung 114, die beispielsweise als Spannungsmesseinrichtung ausgebildet ist und zum Erfassen einer Ausgangsspannung des Zellenmoduls 120 eingerichtet ist. In Ausführungsformen kann die Messeinrichtung 114 zum Erfassen einer Einzelzellspannung jeder Einzelzelle 122 des Zellenmoduls 120 eingerichtet sein (nicht gezeigt).

Das Elektronikmodul 110 umfasst in diesem Beispiel weiterhin zwei elektrische Kontakte 111, 112 zum Kontaktieren von korrespondierenden elektrischen Kontakten der Handwerkzeugmaschine 1. An den Kontakten 111, 112 wird insbesondere die Ausgangsspannung des Zellenmoduls 120 bereitgestellt. Ein Strom zum Antreiben eines Elektromotors 2 (siehe Fig. 6) der Handwerkzeugmaschine 1 fließt in diesem Beispiel von den elektrischen Verbindern 132A über die elektrischen Verbinder 132B und den Kontakten 111, 112 zu dem Elektromotor 2.

Mittels den lösbaren mechanischen 130A, 130B und elektrischen 132A, 132B Verbindern können das Elektronikmodul 110 und das Zellenmodul 120 voneinander getrennt und wieder verbunden werden, ohne dass eines davon beschädigt wird. Mit anderen Worten kann die modulare Akkueinheit 100 auseinandergebaut und wieder zusammengebaut werden.

Die Akkueinheit 100 ist nicht auf nur ein Zellenmodul 120 beschränkt, wie nachfolgend anhand der Fig. 2 erläutert ist. Fig. 2 zeigt eine schematische Ansicht von zwei Zellenmodulen 120A, 120B, die jeweils eine Halterahmen 121 und mehrere Einzelzellen 122 aufweisen. Die Zellenmodule sind jeweils mit lösbaren mechanischen Verbindern 130A (siehe Fig. 1) ausgestattet, auf deren Darstellung aus Gründen der Übersicht in der Fig. 2 verzichtet wurde. Die beiden Zellenmodule 120A, 120B sind dazu eingerichtet, über lösbare mechanische 130 A, 130B und elektrische 132 Verbindungen verbunden und wieder getrennt zu werden. Die Zellenmodule 120A, 120B sind dabei insbesondere für den gemeinsamen Einsatz in einer modularen Akkueinheit 100 in Kombination mit einem Elektronikmodul 110 (siehe Fig. 1) ausgebildet.

Hierzu weist jedes der Zellenmodule 120A, 120B einen lösbaren elektrischen Verbinder 132A auf, über welchen eine elektrische Verbindung mit dem Elektronikmodul 110 und/oder mit der Handwerkzeugmaschine 100 hergestellt werden kann. Zusätzlich weist jedes der Zellenmodule 120A, 120B einen elektrischen Kontakt 132 zum Kontaktieren des jeweils anderen Zellenmoduls 120A, 120B auf. Wenn die Zellenmodule 120A, 120B mittels der lösbaren mechanischen Verbinder 130A, 130B miteinander gekoppelt werden, was in diesem Beispiel formschlüssig mittels eines in den jeweiligen Halterahmen 121 eingearbeiteten Schwalbenschwanz-Verbinder erfolgt, werden die elektrischen Kontakte 132 zugleich kontaktiert. Alternativ hierzu kann auch ein separater Steckkontakt vorgesehen sein.

Indem die elektrischen Kontakte 132 kontaktiert werden, werden die beiden Zellenmodule 120A, 120B elektrisch in Reihe geschaltet, wobei an beiden den elektrischen Verbindern 132A die Ausgangsspannung bereitgestellt wird (siehe hierzu auch nachfolgend Fig. 3). Die in dieser Weise lösbar miteinander verbundenen Zellenmodule 120A, 120B können dann mit einem korrespondierenden Elektronikmodul 110 verbunden werden, um ein Akkueinheit 100 auszubilden.

Fig. 3 zeigt eine schematische Topologie einer elektrischen Verschaltung einer modularen Akkueinheit 100 für eine Handwerkzeugmaschine 1. Die Fig. 3 stellt dabei den Fall dar, dass zwei Zellenmodule 120A, 120B miteinander in Reihe geschaltet werden. Das Elektronikmodul 110 ist zum Erfassen verschiedener Messwerte I (Strom), U (Spannung), T (Temperatur) der Zellenmodule 120A, 120B eingerichtet. Insbesondere weist das Elektronikmodul 110 zwei Temperatursensoren TS auf, von denen jeweils einer einem der Zellenmodule 120A, 120B zugeordnet ist. Nicht dargestellt, aber ebenfalls möglich, ist das Erfassen von Einzelzellspannungen für jede Einzelzelle 122 (siehe Fig. 1 oder 2) der Zellenmodule 120A, 120B.

In der Fig. 3 ist ersichtlich, dass alle elektrischen Verbindungen 132 über lösbare Buchse/Stecker Kombinationen oder dergleichen erfolgen. Über einen Hauptschalter 3 in der Handwerkzeugmaschine 1 wird der Stromkreis geschlossen, so dass ein von der modularen Akkueinheit 100 bereitgestellter Strom durch den Motor 2 der Handwerkzeugmaschine 1 fließen kann.

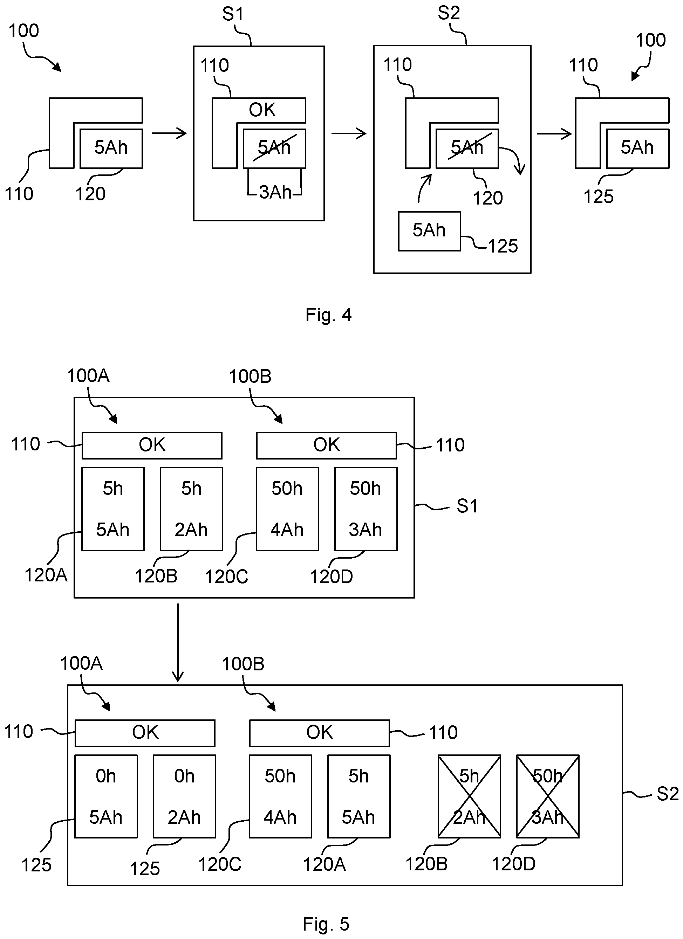

Fig. 4 zeigt ein schematisches Flussdiagramm eines Reparaturverfahrens für eine modulare Akkueinheit 100, beispielsweise der in der Fig. 1 gezeigten. Die Akkueinheit 100 ist zur Verwendung in einer akkubetriebenen Handwerkzeugmaschine 1 (siehe Fig. 3 oder 6) vorgesehen.

Ausgangspunkt ist eine modulare Akkueinheit 100 die ein Elektronikmodul 110 und ein Zellenmodul 120 umfasst. Nominell sollte das Zellenmodul 120 beispielsweise eine Kapazität von 5 Ah (Amperestunden) aufweisen.

In einem ersten Schritt S1 des Reparaturverfahrens wird ein Zustand des Zellenmoduls 120 ermittelt. In diesem Beispiel wird beispielsweise eine tatsächliche Kapazität von nur 3 Ah ermittelt. Dies kann beispielsweise aufgrund einer Alterung des Zellenmoduls 120 nach einiger Benutzung der Fall sein. Der Zustand des Elektronikmoduls 110 wird ebenfalls ermittelt, wobei keine Fehlfunktionen oder dergleichen festgestellt werden. Das Elektronikmodul ist entsprechend mit "OK" gekennzeichnet. Für den ersten Schritt muss die modulare Akkueinheit 100 nicht zwingend auseinandergebaut werden.

In einem zweiten Schritt S2 des Reparaturverfahrens wird das Zellenmodul 120 durch ein Ersatz-Zellenmodul 125 ausgetauscht. Es handelt sich bei dem Ersatz-Zellenmodul 125 beispielsweise um ein fabrikneues Zellenmodul. Das Ersatz-Zellenmodul 125 weist die vollen 5 Ah Kapazität auf. Für den Austausch wird das alte Zellenmodul 120 von dem Elektronikmodul 110 abmontiert, indem die lösbaren mechanischen 130A, 130B (siehe Fig. 1) und elektrischen 132A, 132B Verbindungen getrennt werden, und anschließend wird das Ersatz-Zellenmodul 125 mittels der Verbindungen 130A, 130B, 132A, 132B an das Elektronikmodul 110 montiert.

Die reparierte Akkueinheit 100 weist anschließend eine mit einer komplett neuen Akkueinheit vergleichbare Leistung auf.

Fig. 5 zeigt ein schematisches Flussdiagramm eines weiteren Reparaturverfahrens für modulare Akkueinheiten 100A, 100B. Die Akkueinheiten 100A, 100B sind jeweils zur Verwendung in einer akkubetriebenen Handwerkzeugmaschine 1 (siehe Fig. 3 oder 6) vorgesehen. In diesem Beispiel weisen die Akkueinheiten 100 jeweils ein Elektronikmodul 110 und zwei Zellenmodule 120A, 120B, 120C, 120D auf. Der Aufbau einer einzelnen Akkueinheit 100A, 100B kann beispielsweise wie anhand der Fig. 2 oder Fig. 3 erläutert sein.

In dem ersten Verfahrensschritt S1 wird der Zustand beider Akkueinheiten 100A, 100B ermittelt, indem der Zustand jedes Moduls ermittelt wird. Es sei angemerkt, dass in Ausführungsformen auch nur der Zustand der Zellenmodule 120 ermittelt werden kann. In diesem Beispiel umfasst das Ermitteln des Zustands eine Funktionsprüfung des jeweiligen Elektronikmoduls 110, wobei beide Elektronikmodule 110 gut sind ("OK"), und es wird eine Betriebsdauer sowie eine tatsächliche Ladekapazität jedes Zellenmoduls 120A, 120B, 120C, 120D ermittelt. Das Zellenmodul 120A weist eine Betriebsdauer von 5h und eine tatsächliche Kapazität von 5 Ah auf. Das Zellenmodul 120B weist eine Betriebsdauer von 5h und eine tatsächliche Kapazität von 2 Ah auf. Das Zellenmodul 120C weist eine Betriebsdauer von 50h und eine tatsächliche Kapazität von 4 Ah auf. Das Zellenmodul 120D weist eine Betriebsdauer von 5h und eine tatsächliche Kapazität von 3 Ah auf.

In dem zweiten Verfahrensschritt S2 werden die Zellenmodule 120A, 120B, 120C, 120D zumindest teilweise ausgetauscht. In diesem Beispiel wird die Akkueinheit 100A komplett mit neuen Ersatz-Zellenmodulen 125 bestückt. Bei der Akkueinheit 110B wird das schwächere Zellenmodul 120D durch das Zellenmodul 120A, das von der Akkueinheit 110A abmontiert wurde, ersetzt.

Die zwei schwächsten Zellenmodule 120B, 120D werden der Wiederverwertung zugeführt, da diese keine ausreichende elektrische Leistung mehr aufweisen.

Auf die beschrieben Weise lassen sich bei einer Mehrzahl von modularen Akkueinheiten 100A, 100B, die jeweils eine Mehrzahl von Zellenmodulen 120 aufweisen, Paare von Zellenmodulen 120 ermitteln, deren Zustand für eine weitere Verwendung noch in Ordnung ist und die einen ähnlichen Zustand aufweisen. Diese Paare lassen sich dann in reparierten Akkueinheiten 100 verwenden. Zellenmodule 120, deren Zustand schlecht ist, können weiterverwertet werden und werden durch andere Zellenmodule 120 ersetzt. Der Zustand einer reparierten Akkueinheit 100 ist daher immer besser als der Zustand der Akkueinheit 100 vor der Reparatur.

Fig. 6 zeigt eine schematische Ansicht einer akkubetriebenen Handwerkzeugmaschine 1. Es handelt sich beispielsweise um einen Bohrhammer. Der Bohrhammer 1 weist einen Elektromotor 2 auf, der von einer modularen Akkueinheit 100, beispielsweise der anhand der Fig. 2 oder 3 erläuterten, mit Strom versorgt wird. Ein Hauptschalter 3 kontrolliert dabei beispielsweise die Leistung, die der Akkueinheit 100 entnommen wird. In diesem Beispiel weist die Akkueinheit 100 ein Elektronikmodul 110 und zwei Zellenmodule 120A, 120B auf. Wenn die Akkueinheit 100 in ihrer Leistung nachlässt, dann kann sie beispielsweise mittels des anhand der Fig. 4 oder Fig. 5 erläuterten Reparaturverfahrens repariert werden, indem eines oder auch beide Zellenmodule 120A, 120B ausgetauscht werden.

### BEZUGSZEICHENLISTE

- 1: Handwerkzeugmaschine
- 2: Elektromotor
- 3: Schalter
- 100: modulare Akkueinheit
- 100A: modulare Akkueinheit
- 100B: modulare Akkueinheit
- 110: Elektronikmodul
- 111: elektrischer Kontakt
- 112: elektrischer Kontakt
- 114: Messeinrichtung
- 120: Zellenmodul
- 120A: Zellenmodul
- 120B: Zellenmodul
- 120C: Zellenmodul
- 120D: Zellenmodul
- 121: Halterahmen
- 122: Einzelzelle
- 123: elektrische Verbindung
- 125: Ersatz-Zellenmodul
- 130: lösbare mechanische Verbindung
- 130A: lösbare mechanische Verbindung
- 130B: lösbare mechanische Verbindung
- 132: lösbare elektrische Verbindung
- 132A: lösbare elektrische Verbindung
- 132B: lösbare elektrische Verbindung

- I: Strom
- S1: Verfahrensschritt
- S2: Verfahrensschritt
- T: Temperatur
- TS: Temperatursensor
- U: Spannung

## Patentansprüche

1. Modulare Akkueinheit (100) für eine Handwerkzeugmaschine (1), mit einem Elektronikmodul (110) und wenigstens einem Zellenmodul (120), wobei das Elektronikmodul (110) zum Überwachen eines Zustands des wenigstens einen Zellenmoduls (120) in Abhängigkeit wenigstens eines Messwerts (U, I, T) eingerichtet ist, wobei das wenigstens eine Zellenmodul (120) einen Halterahmen (121) und mehrere von dem Halterahmen (121) gehaltene Einzelzellen (122) aufweist, wobei die Einzelzellen (122) in dem Halterahmen (121) zum Bereitstellen einer vorgegebenen Ausgangsspannung elektrisch miteinander verbunden (123) sind, und wobei das Elektronikmodul (110) und das wenigstens eine Zellenmodul (120) ausschließlich über lösbare mechanische (130) und elektrische (132) Verbindungen miteinander verbindbar sind.

2. Modulare Akkueinheit nach Anspruch 1, **dadurch gekennzeichnet, dass** das Elektronikmodul (110) zum Erfassen wenigstens eines Spannungswerts (U) und/oder eines Stromwerts (I) und zum Überwachen des Zustands des wenigstens einen Zellenmoduls (120) in Abhängigkeit des erfassten Spannungswerts (U) und/oder Stromwerts (I) eingerichtet ist.

3. Modulare Akkueinheit nach Anspruch 1 oder 2, **dadurch gekennzeichnet, dass** das Elektronikmodul (100) wenigstens einen Temperatursensor (TS) zum Erfassen wenigstens eines Temperaturwerts (T) des wenigstens einen Zellenmoduls (120) umfasst und wobei das Elektronikmodul (100) zum Überwachen des Zustands des Zellenmoduls (120) in Abhängigkeit des erfassten Temperaturwerts (T) eingerichtet ist.

4. Modulare Akkueinheit nach Anspruch 3, **dadurch gekennzeichnet, dass** der Temperatursensor (TS) von einem Federelement in einem direkten Kontakt mit einer Einzelzelle (122) des wenigstens einen Zellenmoduls (120) gehalten wird.

5. Modulare Akkueinheit nach einem der Ansprüche 1 - 4, **dadurch gekennzeichnet, dass** das Elektronikmodul (110) zum Erfassen einer Einzelzellspannung jeder Einzelzelle (122) des wenigstens einen Zellenmoduls (120) eingerichtet ist, wobei für jede Einzelzelle (122) eine zugeordnete elektrische Leitung vorgesehen ist.

6. Modulare Akkueinheit nach einem der Ansprüche 1 - 5, **dadurch gekennzeichnet, dass** die Einzelzellen (122) in dem wenigstens einen Zellenmodul (120) in einer elektrischen Reihenschaltung und/oder elektrischen Parallelschaltung miteinander verbunden sind, so dass das Zellenmodul (120) die vorgegebene Ausgangsspannung und eine vorgegebene Ladungskapazität aufweist.

7. Modulare Akkueinheit nach einem der Ansprüche 1 - 6, **gekennzeichnet durch** zwei oder mehr Zellenmodule (120), die wiederlösbar miteinander koppelbar sind.

8. Modulare Akkueinheit nach Anspruch 7, **dadurch gekennzeichnet, dass** die zwei oder mehr Zellenmodule (120) in einer elektrischen Reihenschaltung miteinander verbunden sind, so dass die Ausgangsspannung der Akkueinheit (100) der Summe der von den zwei oder mehr Zellenmodulen (120) bereitgestellten Ausgangsspannung entspricht.

9. Modulare Akkueinheit nach Anspruch 7 oder 8, **dadurch gekennzeichnet, dass** die zwei oder mehr Zellenmodule (120) mittels Rast-, Schnapp-, Steck- und/oder Schraubverbindungen (130) miteinander verbindbar sind, insbesondere formschlüssig und/oder kraftschlüssig miteinander verbindbar sind.

10. Handwerkzeugmaschine (1) mit einer modularen Akkueinheit (100) nach einem der Ansprüche 1 - 9.

11. Reparaturverfahren für eine modulare Akkueinheit (100) umfassend ein Elektronikmodul (110) und wenigstens ein Zellenmodul (120), die ausschließlich über lösbare mechanische (130) und elektrische (132) Verbindungen miteinander verbindbar sind, mit den Schritten:
Ermitteln (S1) eines Zustands des wenigstens einen Zellenmoduls (120), und
Austauschen (S2) des wenigstens einen Zellenmoduls (120) in Abhängigkeit des ermittelten Zustands durch ein Ersatz-Zellenmodul (120), dessen Zustand besser als der ermittelte Zustand ist.

12. Reparaturverfahren nach Anspruch 11, **dadurch gekennzeichnet, dass** das Austauschen umfasst:
Zerlegen der modularen Akkueinheit (100) in das Elektronikmodul (110) und das wenigstens eine Zellenmodul (120) durch Lösen der lösbaren mechanischen (130) und elektrischen (132) Verbindungen, und
Zusammensetzen der modularen Akkueinheit (100) mit dem Elektronikmodul (110) und dem Ersatz-Zellenmodul (125) durch Schließen der lösbaren mechanischen (130) und elektrischen (132) Verbindungen.

13. Reparaturverfahren nach Anspruch 11 oder 12, **dadurch gekennzeichnet, dass** das Ersatz-Zellenmodul (125) ein fabrikneues Zellenmodul ist.

14. Reparaturverfahren nach Anspruch 11 oder 12, **dadurch gekennzeichnet, dass** die modulare Akkueinheit (100) zwei oder mehr Zellenmodule (120) aufweist, die wiederlösbar miteinander koppelbar sind, wobei nur genau eines der Zellenmodule (120) ausgetauscht wird und/oder wobei mindestens eines der Zellenmodule (120) nicht ausgetauscht wird.

15. Reparaturverfahren nach einem der Ansprüche 11 - 14, **dadurch gekennzeichnet, dass** das Ermitteln des Zustands eines jeweiligen Zellenmoduls (120) ein Ermitteln einer Ladekapazität, eines Innenwiderstands, einer Anzahl von Ladezyklen und/oder einer Entladekurve umfasst.
